# EUROPÄISCHE PATENTSCHRIFT

(11) **EP 0 589 231 B1**
(45) Veröffentlichungstag und Bekanntmachung des Hinweises auf die Patenterteilung: **22.10.1997**
(21) Anmeldenummer: 93113669.1
(22) Anmeldetag: 26.08.1993
(51) Int. Cl.: H04M 3/00, H04M 7/00

(54) **Teilnehmeranschlusssatz für den Anschluss einer Fernsprechnebenstellenanlage an eine öffentliche Fernsprechvermittlungsstelle**
Subscriber interface for connecting a private branch exchange to a public exchange
Interface d'abonné pour raccordement d'une centrale privée à une centrale publique

(30) Priorität: 24.09.1992 DE 4232051
(43) Veröffentlichungstag der Anmeldung: 30.03.1994
(73) Patentinhaber: SIEMENS AKTIENGESELLSCHAFT, 80333 München (DE)
(72) Erfinder: Bronold, Josef, Dipl.-Ing., D-82110 Germering (DE); Kovar, Kurt, Ing., D-82140 Olching (DE)

(56) Entgegenhaltungen:
- DE-A- 2 540 554
- FR-A- 2 120 252
- US-A- 3 808 378
- US-A- 4 982 426

## Beschreibung

Die Erfindung betrifft einen Teilnehmeranschlußsatz für den Anschluß einer Fernsprechnebenstellenanlage an eine öffentliche Fernsprechvermittlungsstelle gemäß dem Oberbegriff des Patentanspruchs 1.

Es handelt sich demnach um einen Teilnehmeranschlußsatz für eine Nebenstellenanlage, bei der eine Durchwahl möglich ist, also von einem Teilnehmerendgerät der stellenanlage aus direkt ein an die öffentliche Vermittlungsstelle angeschlossenes Teilnehmerendgerät angewählt werden kann und umgekehrt eine direkte Anwahl wenigstens eines Teils der Endgeräte der Nebenstellenanlage von der öffentlichen Fernsprechvermittlungsstelle aus möglich ist.

Die Aufgabe eines solchen Teilnehmeranschlußsatzes besteht im wesentlichen darin, für die Signal- und Sprachübertragung zwischen öffentlicher Vermittlungsstelle und Nebenstellenanlage zu sorgen. Es ist dabei vorausgesetzt, daß zwischen dem Teilnehmeranschlußsatz, im folgenden Durchwahlsatz genannt, und der Nebenstellenanlage eine Signalisierung nach einem Gleichstromzeichengabeverfahren stattfindet, bei dem die Zeichengabe durch symmetrische Leitungszeichen (z.B. Schleifenschluß) und unsymmetrische Leitungszeichen (z.B. Erde) auf der a- oder b-Ader erfolgt. Es müssen in diesem Zusammenhang spezielle Stromquellen, Abschlußwiderstände und Leitungszustandsindikatoren in wechselnden Kombinationen an die Adern der Teilnehmeranschlußleitung angeschaltet werden.

Spezielle Forderungen an den Betrieb des Durchwahlsatzes sind die Gewährleistung einer symmetrischen Sprachübertragung, wobei sich Sprachübertragung und Signalisierung gegenseitig nicht beeinflussen dürfen. Es ist ferner zu fordern, daß Sprachübertragung und Signalisierung unterhalb einer vorgegebenen Schwelle von eingekoppelten Störspannungen nicht beeinflußt werden. Schließlich sollen Bauelemente, die überspannungs- und überstromempfindlich sind, vor Beschädigungen geschützt werden.

Bei den bisherigen Durchwahlsätzen wurden im Zusammenhang mit der Indikation von Rückwärtszeichen, also von im Zustand einer zur Nebenstelle gerichteten Verbindung von der Nebenstellenanlage aus gesendeten Signalisierungskennzeichen Indikatoren angeschaltet, deren Eingangswiderstände in die Adern der Anschlußleitung eingefügt sind und ungleich große Widerstandswerte aufweisen. Im Zustand einer gehenden, also zur öffentlichen Vermittlungsstelle hin gerichteten Verbindung wird die Speisespannung für die Nebenstellenanlage an die Adernanschlußleitung gelegt.

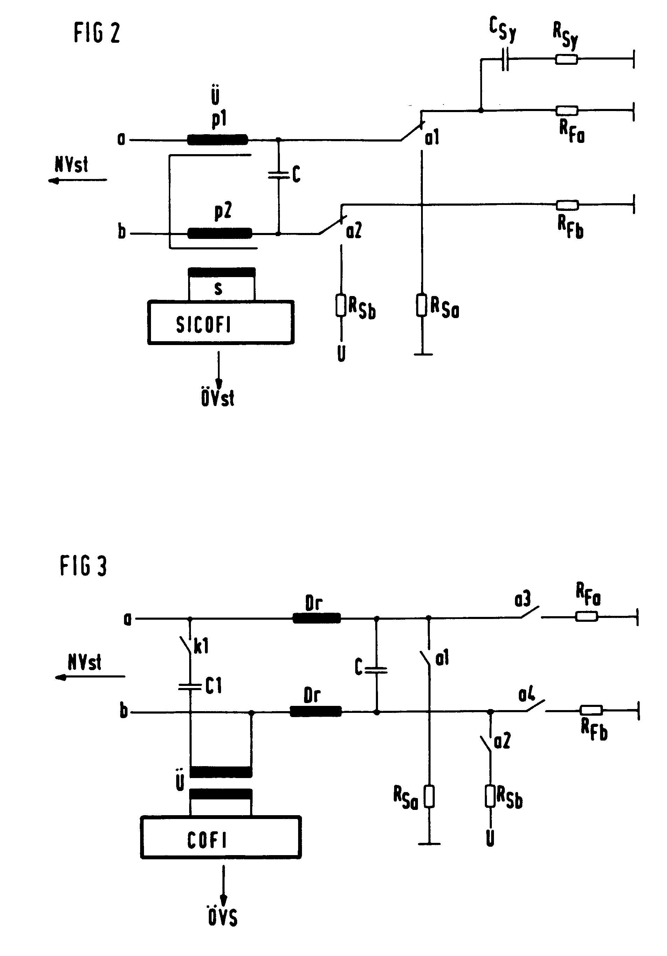

Bei bekannten Durchwahlsätzen ist, wie FIG 3 zeigt, zwischen die Nebenstellenanlage und die Einspeisestellen für die Speisespannung, bzw. die Stellen der mit ihrem Eingangswiderstand in die Adern der Anschlußleitung eingefügten Indikatoren, ein Speisedrosselglied in die Anschlußleitung eingefügt, das aus zwei in den Adern der Anschlußleitung liegenden Drosselspulen Dr sowie aus einem deren der Nebenstellenanlage abgewendete Anschlüsse verbindenden Kondensator C besteht. Durch diese Speisedrossel ist verhindert, daß Sprachwechselströme über die Speisewiderstände RSa und RSb bzw. über die Eingangswiderstände RFa und RFb der genannten Indikatoren fließen konnten. Zur Auskopplung der Spachsignale an eine Einrichtung zur Sprachverarbeitung COFI dient ein gesonderter Übertrager Ü, dessen Primärwicklung über einen Kondensator C1 und einen Schalter k1 die Adern a und b der Anschlußleitung miteinander verbindet.

Speiseübertrager Ü und Speisedrossel DR/DR/C stellen insgesamt teure Bauteile dar und haben einen relativ großen Raumbedarf.

Gemäß DE-A-2 540 554 ist ein Speiseübertrager zur Auskopplung der Sprachsignale an eine Einrichtung zur Sprachsignalverarbeitung vorgesehen, der so ausgebildet ist, daß seine Primärwicklungen sowohl vom Sprachwechselstrom als auch vom Speisestrom für die Nebenstellenanlage durchflossen werden, wobei durch einen ihre der Nebenstellenanlage abgewendeten Anschlüsse verbindenden Kondensator in ausreichendem Maße verhindert ist, daß der Sprachwechselstrom die vorerwähnten Signalisierungselemente beeinflußt. Es ist Aufgabe der Erfindung, dafür Sorge zutragen, daß durch die Signalisierungselemente bedingte Unsymmetrieen wechselstrommäßig ausgeglichen werden, so daß Längsströme, die aufgrund von Einkopplungen auf die Adern der Anschlußleitung auftreten können, nicht zu Störungen beim Teilnehmer in Form von entsprechenden Störgeräuschen führen können. Erfindungsgemäß wird diese Aufgabe durch die im Kennzeichen des Patentanspruchs angegebenen Merkmale gelöst.

Nachstehend wird die Erfindung anhand eines Ausführungsbeispiels unter Bezugnahme auf eine Zeichnung näher erläutert.

In der Zeichnung zeigen:
FIG 1 die Struktur einer öffentlichen Fernsprechvermittlungsanlage, deren Bestandteil der erfindungsgemäße Durchwahlsatz ist,
FIG 2 einen Teil des erfindungsgemäßen Durchwahlsatzes,
FIG 3 einen Teil des oben schon besprochenen bekannten Durchwahlsatzes.

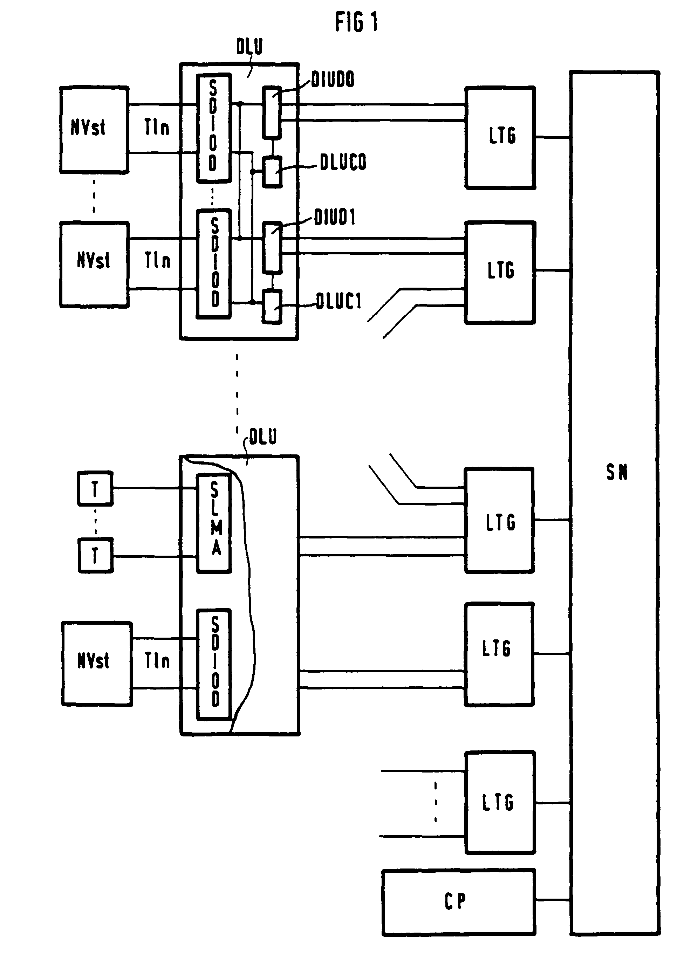

Die FIG 1 zeigt als zentrale Teile einer öffentlichen Fernsprechvermittlungsstelle ein zentrales Koppelnetz SN, sowie einen zentralen Koordinationsprozessor CP. Zur Peripherie dieser Vermittlungsstelle gehören Anschlußgruppen LTG, die die Schnittstelle zwischen der digitalen Umgebung der Vermittlungsstelle und dem zentralen Koppelnetz SN bilden. Diese Anschlußgruppen können, wie im dargestellten Fall, mit einer digitalen Übertragungsstrecke beschaltet sein, die sie mit einer digitalen Teilnehmerleitungseinheit DLU verbindet. Sie können aber auch mit digitalen Verbindungsleitungen beschaltet sein, die eine Verbindung zu anderen öffentlichen Vermittlungsstellen herstellen. Weitere Anschlußmöglichkeiten sind ein Primärmultiplexanschluß für mittlere und große ISDN-Nebenstellenanlagen, sowie digitale Anschlußleitungen für Digital-Vermittlungsplätze.

Die ebenfalls zur Peripherie gehörenden erwähnten digitalen Teilnehmerleitungseinheiten DLU dienen dem Anschluß entweder von Teilnehmerleitungen, die Verbindungen zu analogen Endgeräten herstellen oder, wie im dargestellten Fall, zum Anschluß von Anschlußleitungen, die der Verbindung mit mittleren und kleinen Nebenstellenanlagen NVst dienen. Die digitalen Teilnehmerleitungseinheiten DLU können lokal innerhalb der Vermittlungsstelle oder abgesetzt von der Vermittlungsstelle angeordnet sein.

Die digitalen Teilnehmerleitungseinheiten umfassen neben gedoppelten Steuereinheiten DLUC Schnittelleneinheiten DIUD, sowie die eigentlichen Teilnehmeranschlußsätze, bei denen es sich im dargestellten Fall des Anschlusses von Nebenstellen mit Durchwahl um Durchwahlsätze S:DIOD handelt.

Ein solcher Durchwahlsatz dient dem Anschluß von bis zu vier mit einer Nebenstellenanlage NVst verbindenden Anschlußleitungen AL.

Die wesentlichen Aufgaben eines solchen Durchwahlsatzes sind die Überwachung der Anschlußleitungen zur Nebenstellenanlage (Leitungsindikation), die Signalisierung zwischen der Nebenstellenanlage und der digitalen Teilnehmerleitungseinheit, die Aufnahme von Impulswahlzeichen und die Zeichenvorverarbeitung, die Erzeugung und das Senden von 16-kHz-Zählimpulsen, das Erzeugen und Senden von Auslöseimpulsen, das Anschalten an eine Prüfeinheit, die programmierbare Einstellung übertragungstechnischer Eigenschaften, die Zweidraht-Vierdraht-Umsetzung, die Gleichspannungsentkopplung der Sprachsignale, die Analog-Digital-Wandlung und die Digital-Analog-Wandlung der Sprachsignale, die Sprachübertragung über eine Sprachschnittstelle und der Signalaustausch über eine Signalschnittstelle.

Bei der Darstellung eines erfindungsgemäßen Durchwahlsatzes gemäß FIG 2 wird von einer Struktur ausgegangen, bei der gemäß einer schon vorgeschlagenen Lösung zwei Gruppen von Signalisierungselementen gebildet werden, von denen die eine und hier dargestellte Gruppe nur solche Signalisierungselemente umfaßt, die im Zusammenhang mit der Sprachübertragung, also im Betriebszustand Gespräch eine Rolle spielen.

Es sind dies die Speisewiderstände RSa und RSb einerseits, sowie Indikatoren, deren Eingangswiderstände RFa und RFb in die Adern a und b der zur Nebenstellenanlage führenden Anschlußleitung eingefügt sind und die einseitig an Erdpotential liegen.

Die Figur zeigt ferner den erfindungsgemäß verwendeten Speiseübertrager Ü, dessen Primärwicklungen p1 und p2 ebenfalls in die Adern a und b der Anschlußleitung eingefügt sind, und deren der Nebenstellenanlage NVst abgewendeten Anschlüsse durch einen Kondensator C miteinander verbunden sind. An der Sekundärwicklung s dieses Übertragers liegt eine Einrichtung zur Sprachverarbeitung SICOFI.

Die Eingangswiderstände RFa und RFb der erwähnten Indikatoren weichen in ihrem Widerstandswert beträchtlich voneinander ab. Da der erfindungsgemäße Speiseübertrager nicht die Wirkung der Speisedrossel der bisherigen Ausführung eines Durchwahlsatzes hat, könnten wegen der durch diese unterschiedlichen Widerstandswerte vorliegenden Unsymmetrie aufgrund von Einstreuungen auf die Adern a und b der Anschlußleitung auftretende Längsspannungen zu Stördifferenzspannungen führen, die sich beim Teilnehmer als Störgeräusche bemerkbar machen.

Erfindungsgemäß ist daher ein aus einem Widerstand Rsy und einem Kondensator Csy bestehendes RC-Glied vorgesehen, das einem der genannten Widerstände, hier dem Widerstand RFa parallelgeschaltet ist und dessen Widerstand Rsy so bemessen ist, daß wechselstrommäßig insgesamt wieder symmetrische Verhältnisse vorliegen. Die Längsspannungen, die dann auf den beiden Adern der Anschlußleitung mit gleicher Amplitude auftreten, werden sich demzufolge in ihrer Wirkung kompensieren, so daß Störungen beim Teilnehmer vermieden sind.

## Patentansprüche

1. Teilnehmeranschlußsatz für den Anschluß einer Fernsprechnebenstellenanlage an eine öffentliche Fernsprechvermittlungsstelle, über den eine Durchwahl von und zu der Nebenstellenanlage möglich ist und der für eine Gleichstromzeichengabesignalisierung ausgelegt ist,
mit einem Speiseübertrager (Ü) zum Auskoppeln der auf der mit der Nebenstellenanlage verbindenden Anschlußleitung (AL) auftretenden Sprachsignale an eine Bestandteil des Teilnehmeranschlußsatzes bildende Einrichtung (SICOFI) zur Sprachsignalverarbeitung aufweist, der zwei in die Adern (a, b) der Anschlußleitung (AL) eingefügte und an ihren der Nebenstellenanlage abgewendeten Anschlüssen durch einen Kondensator (C) verbundene Primärwicklungen (p1, p2) aufweist , die zwischen der Nebenstellenanlage (NVst) und Einspeisestelle zum Anlegen einer Speisespannung (U) für die Nebenstellenanlage (NVst) liegen, so daß sie sowohl vom Sprachwechselstrom als auch vom Speisestrom durchflossen werden, **dadurch gekennzeichnet**, daß durch an einer der Nebenstellenanlage abgewendeten Seite der Übertragerwicklungen (p1,p2) in die Leitungsadern (a, b) der Anschlußleitung (AL) eingefügte (RFa, RFb) oder an diese anschaltbare Signalisierungselemente (RSa, RSb) entstandene unsymmetrische Widerstandsverhältnisse durch wenigstens ein, einem dieser Signalisierungselemente (RFa) parallelgeschaltetes RC-Glied (Rsy, Csy) mit entsprechend dimensioniertem Widerstand (Rsy) und Kondensator (Csy) symmetrisch gemacht sind.

## Claims

1. Subscriber interface for connection of a private branch exchange to a public telephone exchange, via which it is possible to dial directly from and to the private branch exchange and which is designed for DC signalling, having a supply transformer (Ü) for outputting the voice signals which occur on the subscriber line (AL) connected to the private branch exchange, to a device (SICOFI), which forms a component of the subscriber interface, for voice signal processing, which supply transformer (Ü) has two primary windings (p1, p2) which are inserted into the wires (a, b) of the subscriber line (AL) and are connected by a capacitor (C) to the connections of said subscriber line (AL) facing away from the private branch exchange, which primary windings are located between the private branch exchange (NVst) and the feed point for applying a supply voltage (U) for the private branch exchange (NVst), so that both the voice alternating current and the supply current flow through them, characterized in that unbalanced resistance conditions, which are caused by signalling elements (RSa, RSb) which, on a side of the transformer windings (p1, p2) facing away from the private branch exchange, are inserted into the line wires (a, b) of the subscriber line (AL) or can be connected to it, are balanced by means of at least one RC element (Rsy, Csy) which is connected in parallel with one of these signalling elements (RFa) and has a resistor (Rsy) and capacitor (Csy) of appropriate size.

## Revendications

1. Module de raccordement d'abonné pour le raccordement d'un central téléphonique privé à un central téléphonique public, par l'intermédiaire duquel peut s'effectuer une sélection directe en provenance et à destination du central téléphonique privé et qui est conçu pour une signalisation par courant continu,
comportant un transformateur (Ü) d'alimentation pour la sortie des signaux de parole apparaissant sur la ligne (AL) de raccordement reliant au central privé, vers un dispositif (SICOFI) faisant partie du module de raccordement d'abonné et destiné au traitement des signaux de parole, le transformateur comportant deux enroulements primaires (p1, p2), qui sont insérés dans les fils (a, b) de la ligne (AL) de raccordement, qui sont reliés à leurs bornes, éloignées du central privé, par un condensateur (C) et qui se trouvent entre le central privé (NVst) et le point d'alimentation pour l'application d'une tension (U) d'alimentation pour le central privé (NVst), de sorte qu'il passe dans ceux-ci à la fois le courant alternatif de parole et le courant d'alimentation, caractérisé en ce que les rapports dissymétriques de résistance apparus à cause d'éléments (RSa, RSb) de signalisation insérés (RFa, RFb) d'un côté, éloigné du central privé, des enroulements (p1, p2) du transformateur dans les fils (a, b) de la ligne (AL) de raccordement ou pouvant être branchés à ceux-ci, sont rendus symétriques par au moins un élément RC (Rsy, Csy) qui est branché en parallèle avec l'un de ces éléments (RFa) de signalisation et comportant une résistance (Rsy) et un condensateur (Csy) de valeurs appropriées.
